# EUROPEAN PATENT APPLICATION

(11) **EP 2 375 324 A2**
(43) Date of publication of application: **12.10.2011**
(21) Application number: 11150587.1
(22) Date of filing: 11.01.2011
(51) Int. Cl.: G06F 9/455

(54) **Virtualization apparatus for providing a transactional input/output interface**

(30) Priority: 17.02.2010 KR 20100014372
(71) Applicant: SAMSUNG ELECTRONICS CO., LTD., Suwon-si Gyeonggi-do 442-742 (KR)
(72) Inventor: Park, Chan-Ju, Gyeonggi-do (KR); Suh, Sang-Bum, Seoul (KR); Lee, Dong-Hyuk, Gyeonggi-do (KR)
(74) Representative: Land, Addick Adrianus Gosling

(57) **Abstract**

A virtualization apparatus and method for providing a transactional input/output interface to prevent input/output performance from deteriorating are provided. The virtualization apparatus includes hardware, a virtual machine monitor to support a plurality of operating systems to use the hardware, and a transaction device driver that executes transactions for hardware I/O operation and to provide an interface for executing a transaction for input/output operations to/from the hardware.

## Description

This application claims the benefit under 35 U.S.C. §119(a) of Korean Patent Application No. 10-2010-0014372, filed on February 17, 2010, in the Korean Intellectual Property Office, the entire disclosure of which is incorporated herein by reference for all purposes.

The following description relates to a virtualization system, and more particularly, to an apparatus and method for processing access to hardware that a plurality of domains share in a virtual environment.

An operating system is a group of programs which provide an interface in a computing apparatus such as a personal computer. Operating systems enable a user to easily use hardware. The operating system manages resources, for example, processors, memories, input/output devices, communication devices, data, and the like.

Recently, a virtualization system that simultaneously supports a plurality of operating systems has been introduced. For example, the virtualization may use a hypervisor to form a virtualization layer on a host operating system and to provide a virtualization layer on a host operating system that enables a plurality of logical virtual machines to be formed on the same virtualization layer. Each of the virtual machines may have a guest operating system installed therein, and applications that are supported by each guest operating system may be installed in the guest operating system. Thus, a plurality of applications from a plurality of operating systems may be simultaneously usable on a single device.

According to one general aspect, there is provided a virtualization apparatus including: hardware; a virtual machine monitor that supports a plurality of operating systems which use the hardware; and a transaction device driver configured to execute a transaction for input/output operations to/from the hardware, and to provide an interface for executing a transaction for input/output operations to/from the hardware, when receiving requests for the input/output operations from a plurality of operating systems operating on the virtual machine monitor.

The transaction device driver may include: a shared device driver that is shared by the plurality of operating systems and that executes the transaction for the input/output operations to/from the hardware; a plurality of domain-bound shared memories one for each of the plurality of operating systems, each domain-bound shared memory storing data generated when the transaction is executed by the domain-bound shared memory's respective operating system; a status log including status information about transaction executions by the plurality of operating systems; and priority information representing priorities of transaction executions between the plurality of operating systems.

The shared device drivers may be provided based on the number of types of hardware modules included in the hardware.

The status information may include identification information of an operating system, a start time of the transaction, and an address of a start code of the transaction.

The virtual machine monitor may store status information about the transaction in the status log when a transaction is executed, and delete the status information about the transaction when the execution of the transaction terminates.

When two or more operating systems of the plurality of operating systems executing the input/output operations to/from the hardware using the transaction device driver execute code of the same transaction section thus generating a conflict, the virtual machine monitor may request an operating system having lower priority from among the two or more operating systems to terminate the execution of the transaction section.

The domain-bound shared memory may be partitioned into a plurality of areas that are individually used by the plurality of operating systems, and each of the plurality of areas may be set to allow access only by its corresponding operating system.

The transaction device driver may be positioned between the virtual machine monitor and the plurality of operating systems.

The transaction device driver may be integrated with the virtual machine monitor.

In another general aspect, there is provided a method of providing an interface for executing input/output operations to/from hardware in a virtualization environment where a virtual machine monitor supports a plurality of operating systems that use hardware, the method including: at the plurality of operating systems, requesting input/output operations to/from the hardware in parallel to a transaction device driver; and at the transaction device driver, executing a transaction for the input/output operations to/from the hardware, in response to the request from the plurality of operating systems, and providing an interface to allow the plurality of operating systems to execute the input/output operations to/from the hardware in parallel.

The method may further include, when a first operating system from among the plurality of operating systems requests an input/output operation to/from first hardware, at the transaction device driver, providing the first operating system with code of a transaction section for the input/output operation to/from the first hardware which is included in a shared device driver shared by the plurality of operating systems; and at the first operating system, storing status information about execution of the transaction code in a status log and executing the transaction using the code of the transaction section.

The status information may include identification information of the operating system, a start time of the transaction, and an address of a start code of the transaction.

The method may further include, at the first operating system, storing data generated upon the execution of the transaction in an area assigned to and used by the first operating system only and included in a domain-bound shared memory.

The domain-bound shared memory may be partitioned into a plurality of areas that are individually and exclusively used by the plurality of operating systems, and each operating system may be assigned a page table set to allow access by only the corresponding operating system.

The method may further include, if the second operating system attempts to execute a transaction for the first hardware using the same code of the transaction section as that provided to the first operating system when the transaction for the first hardware is still being executed by the first operating system, at the virtual machine monitor, determining priority between the first operating system and the second operating system based on priority information that represents priorities of transaction executions between the plurality of operating systems; and at an operating system determined to have lower priority between the first operating system and the second operating system, stopping the execution of the transaction.

In still another general aspect, there is provided a virtualization apparatus including: a virtual machine monitor that supports a plurality of operating systems; and a transactional device driver configured to provide an interface that allows the plurality of operating systems to perform input/output operations to/from hardware simultaneously, and configured to execute the input/output operations to/from the hardware such that the plurality of operating systems execute the input/output operations to/from hardware in parallel.

The transactional device driver may include: a shared device driver, shared by the plurality of operating systems, and which executes a transaction for the input/output operations to/from hardware for each of the plurality of operating systems; and a domain-bound shared memory partitioned into a plurality of areas that are individually used by each of the plurality of operating systems such that each of the plurality of areas is set to allow access to only one of the plurality of operating systems, and each area stores data that is generated when a transaction is executed by the area's corresponding operating system.

Other features and aspects may be apparent from the following description, the drawings, and the claims.

### BRIEF DESCRIPTION OF THE DRAWINGS

FIG. 1 is a diagram illustrating an example of a transactional virtualization apparatus.
FIG. 2 is a diagram illustrating an example of a transactional device driver.
FIG. 3 is a flowchart illustrating an example of a method for providing a transactional input/output interface.
FIG. 4 is a flowchart illustrating an example of a method for processing conflicts between operating systems.

Throughout the drawings and the description, unless otherwise described, the same drawing reference numerals should be understood to refer to the same elements, features, and structures. The relative size and depiction of these elements may be exaggerated for clarity, illustration, and convenience.

### DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein may be suggested to those of ordinary skill in the art. Also, descriptions of well-known functions and constructions may be omitted for increased clarity and conciseness.

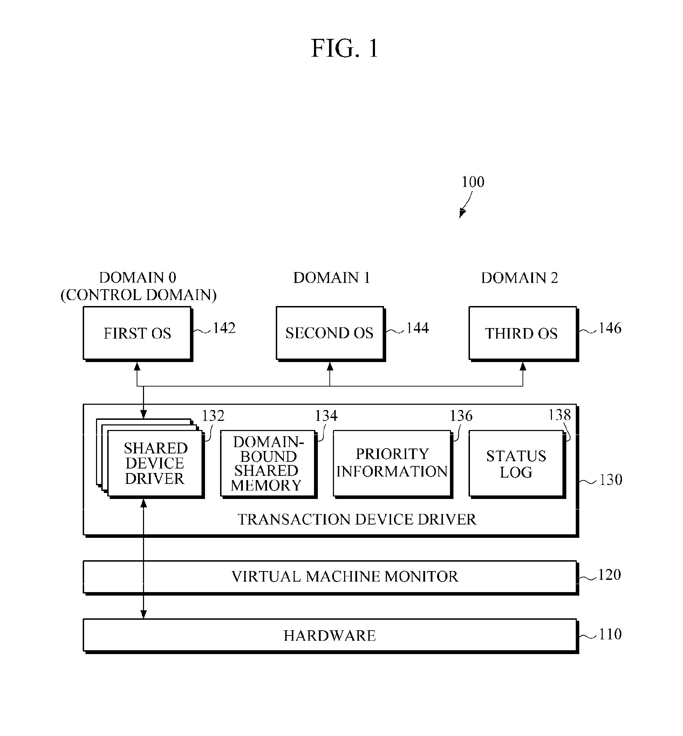

FIG. 1 illustrates an example of a transactional virtualization apparatus.

Referring to FIG. 1, virtualization apparatus 100 includes hardware 110, a virtual machine monitor 120, a transactional device driver 130, and a plurality of operating systems 142, 144, and 146 which are also referred to as first, second, and third operating systems, respectively. The virtualization apparatus 100 uses the virtual machine monitor 120 to support an environment in which the hardware 110 may be used by the plurality of operating systems 142, 144, and 146. For example, the virtualization apparatus 100 may be implemented as a network computer. As another example, the virtualization apparatus may be implemented as a terminal, such as a personal computer, a mobile phone, a Mobile Internet Device (MID), a Digital Television (DTV), a Personal Digital Assistants (PDA), an Ultra Mobile PC and the like, however, the virtual apparatus 100 is not limited to the above-mentioned devices.

The hardware 110 may be a hardware module, for example, a Central Processing Unit (CPU), a Memory Management Unit (MMU), a memory, a communication module, a flash memory, an output device, an input device, and the like.

The virtual machine monitor 120 may be, for example, XEN®, Hypervisor, L4®, and the like.

The plurality of operating systems 142, 144, and 146 may use the single hardware 110 but operate as if being located on separate individual pieces of hardware. In the example shown in FIG. 1 there are three operating systems 142, 144, and 146, however, the number of operating systems (or domains) capable of operating on the hardware 110 is not limited thereto, and it should be appreciated that a greater number or lesser number of operating systems may be operated on the hardware 110.

A domain represents an environment in which an operating system operates. The operating systems 142, 144, and 146 may execute applications which exist on domains where the operating systems 142, 144, and 146 respectively operate.

One of the plurality of operating systems 142, 144, and 146 may function to control other the operating systems and may be referred to as a control domain. For example, the operating system 142 may function as a control domain to control the remaining operating systems 144 and 146.

The following descriptions are given under the assumption that the operating system 142 is a control domain.

The transactional device driver 130 provides an interface that allows the operating systems 142, 144, and 146 to perform input/output operations to/from the hardware 110 in parallel using a transaction method. For example, the plurality of operating systems 142, 144, and 146 may issue hardware input/output requests to the transactional device driver 130 in parallel. The transactional device driver 130 may execute a transaction for the hardware input/output operations in order to provide an interface for performing the hardware input/output operations.

For example, the execution of a transaction may include grouping a plurality of instructions or operations into a transaction such as an atomic section of code or a critical section of code. As an example the transaction may correspond to a synchronization model that allows simultaneous access to shared resources such as a data structure stored in memory. The synchronization model may allow access as long as no access conflict occurs, for example, as long as a plurality of access operations are directed to different shared resources. The transactional device driver 130 may be configured such that the input/output operation of a device driver to/from the hardware 110 is performed in units of transactions.

Accordingly, the plurality of operating systems 142, 144, and 146 may simultaneously issue hardware input/output requests to the transactional device driver 130, in parallel. For example, the operating systems 142, 144, and 146 may access the hardware 110 in parallel through the transactional device driver 130 as long as no access conflict occurs. Because hardware input/output operations may be processed in units of transactions through the transactional device driver 130, a hardware input/output request from the operating systems 142, 144, and 146 may be referred to as a transactional I/O.

In a conventional virtualization system, a control domain has a backend device driver similar to a physical device driver that is included in a general operating system, and guest operating systems each have a frontend device driver in order to use the backend device driver. Accordingly, in order for a guest operating system to use the hardware, the guest operating system may access a control domain through a network or Inter-Domain Communication (IDC) in order to request use of hardware. For example, the control domain may process the request using a backend device driver in order for the guest operating system to use the hardware. Such a hardware input/output method is called a split driver method. In the conventional system, the split driver method deteriorates hardware input/output performance because each of the operating systems perform hardware input/output operations through a backend device of a control domain, thus causing a high occurrence of request conflicts.

In contrast, because the transactional device driver 130 described herein allows the plurality of operating systems 142, 144, and 146 to simultaneously perform hardware input/output operations in parallel, hardware input/output performance may be improved when a native device driver is used for a general operating system to directly access hardware, thus reducing the amount of conflicts.

The transactional device driver 130 may include, for example, a shared device driver 132, a domain-bound shared memory 134, priority information 136, and a status log 138.

The shared device driver 132 may execute a transaction for input/output operations to/from hardware, and may be shared by the plurality of operating systems 142, 144, and 146. The shared device driver 132 executes the operations of inputting/outputting transactions in order to use hardware shared between domains. For example, the shared device driver 132 may be a plurality of device drivers shared by the domains. The device drivers may be provided based on the number of and/or types of hardware modules included in the hardware 110.

The shared device driver 132 may include driver codes that are transformed for each transaction execution unit. For example, each transaction execution unit may be an atomic section that is a processing unit that cannot be divided to be executed. The transaction execution unit is referred to as a transaction section. For example, the transaction section may include an instruction for directly accessing hardware. Each transaction section may include a transaction start instruction for notifying that a transaction starts and a transaction completion instruction for notifying that the transaction terminates. The shared device driver 132 may include general information or codes that may be executed regardless of the transaction execution unit.

The domain-bound shared memory 134 is configured for the individual operating systems 142, 144, and 146, and stores data and other information such as variables that are generated when transactions are executed. Information that is generated when a transaction is executed may be classified and stored for each transaction section in order to return to the state before the transaction starts, for example, when the transaction is paused. For example, the first operating system 142, when executing a transactional I/O operation, may store each atomic section in unit of execution of completion and store data and related information generated upon processing the atomic section in the domain-bound shared memory 134

In order to prevent a certain operating system (or a certain domain) from invading shared memories of other operation systems when executing a transactional I/O operation through the transactional device driver 130, a memory protection method may be used.

For example, the domain-bound shared memory 134 may be partitioned into a plurality of areas that are individually and exclusively used by a plurality of operating systems. Each of the partitioned areas may be set to allow access only to its corresponding operating system. For example, when a certain operating system is assigned an area of the domain-bound shared memory 134, a page table used to access the domain-bound shared memory 110 through the virtual machine monitor 120 may be set to allow access only to the corresponding operating system. For example, a page table that manages an area assigned to the first operating system 142 in the domain-bound shared memory 134 may be set to allow access only by the first operating system 142. Accordingly, the area assigned to the first operating system 142 may be corrected only by the first operating system 142.

When a new operating system (that is, a new domain) is installed on the virtual machine monitor 120, the virtual machine monitor 120 may assign a certain shared memory area of the domain-bound shared memory 134 to the new domain. Accordingly, the newly installed operating system may store data, for example, in order to store data created based on the operation of a shared device driver 132 corresponding to the installed operating system. As an example, assignment of a shared memory area may be performed by the first operating system 142 that acts as the control domain.

The priority information 136 represents priorities of transaction executions between the plurality of operating systems 142, 144, and 146. The priority information 136 may be set in advance or changed based on a request from a user or a system. For example, the priorities of transaction executions may be set in such a manner that operating systems requiring real-time execution have higher priorities.

The status log 138 contains status information about transaction executions by the plurality of operating systems 142, 144, and 146. For example, status information may include identifiers of the operating systems 142, 144, and 146, start times of the transactions, addresses of start codes of the transactions, and the like. As an example, status information may be generated whenever each operating system 142, 144, or 146 executes a transaction. The generated status information may be deleted when the corresponding transaction is complete.

For example, the virtual machine monitor 120 may store status information in the status log 138 when a transaction starts. As another example, the virtual machine monitor 120 may delete the corresponding status information when the transaction is complete. For example, the storage and management of status information may be performed by the virtual machine monitor 120, by the individual operating systems 142, 144, and 146, or by the operating system 142 that is a control domain.

For example, a transaction operation of the first operating system 142 may be performed as follows. An input/output operation to/from the hardware 110 may be requested from the first operating system 142. The transactional device driver 130 may provide the first operating system 142 with a code of a transaction section for the hardware input/output operation and the code included in the shared device driver 132 shared by the plurality of operating systems 142, 144, and 146. When the transaction starts, the first operating system 142 may store status information about the execution status of the transaction in the status log 138. For example, the first operating system 142 may execute the transaction using the code of the transaction section. The first operating system 142 may store the execution result of the transaction in the domain-binded shared memory 134.

The transactional device driver 130 may be positioned between the virtual machine monitor 120 and the plurality of operating systems 142, 144, and 146, as illustrated in FIG. 1. As another example, the transactional device driver 130 may be included in the virtual machine monitor 120 such that it is integrated with the virtual machine monitor 120.

The virtual machine monitor 120 may schedule transactional I/O operations of the plurality of operating systems 142, 144, and 146. In response to receiving a plurality of transactional I/O requests from the plurality of operating systems 142, 144, and 146, the virtual machine monitor 120 may cause an operating system having higher priority to execute a transactional I/O operation first, based on the priority information 136 that represents the priority of the plurality of operating systems 142, 144, and 146. For example, if the first operating system 142 is a control domain, the first operating system 142 may be given priority for executing transactional I/O operations based on the priority information 136.

The virtual machine monitor 120 monitors the occurrence of conflicts between transactional I/O operations when the transactional I/O operations have been scheduled. For example, the virtual machine monitor 120 may generate a conflict event when a new operating system or another operating system attempts to execute a transaction section already being executed by a first operating system. As another example, the virtual machine monitor 120 may request an operating system having lower priority to stop the execution of the transaction in which a conflict has occurred when an operating system having a higher priority has requested to execute the transaction. A request for stopping the execution of a transaction may be issued from the virtual machine monitor 120 and the execution of the transaction may be performed, for example, by the first operating system 142.

For example, if the second operating system 144 attempts to execute a transaction section already being executed by the first operating system 142, the virtual machine monitor 120 may check the priorities of the first and second operating systems 142 and 144 with reference to the priority information 136.

If the first operating system 142 has a higher priority than the second operating system 144, the virtual machine monitor 120 may allow the first operating system 142 to continue to execute the transaction section and request the second operating system 144 to wait until the first operating system 142 terminates execution of the transaction section. As another example, if the second operating system 144 has a higher priority than the first operating system 142, the virtual machine monitor 120 may request the first operating system 142 to pause the execution of the transaction section and may allow the second operating system 144 to execute the transaction section and. Accordingly, after the operation of the second operating system 144 terminates the first operating system 142 may return to the state to resume the transaction.

Although not illustrated in FIG. 1, for example, each of the operating systems 142, 144, and 146 may include a domain-specific device driver for controlling specific hardware set in advance in the corresponding domain in order to directly access the specific hardware. As another example, the domain-specific device driver may be included in the transactional device driver 130 to allow an operating system having control over the corresponding driver to directly access specific hardware.

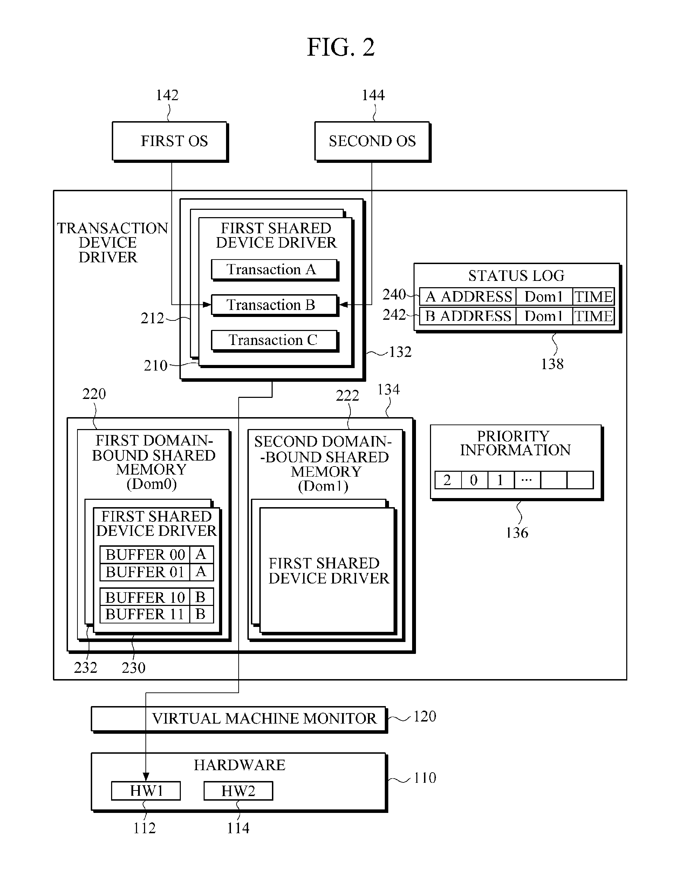

FIG. 2 illustrates an example of the transactional device driver.

Referring to FIG. 2, the shared device driver 132 includes a first shared device driver 210 for controlling first hardware 112, and a second shared device driver 212 for controlling second hardware 114. FIG. 2 illustrates an example in which the first and second operating systems 142 and 144 operate the first shared device driver 210 from among the first and second shared device drivers 210 and 220 corresponding to the shared device driver 132. The first shared device driver 210 may include, as illustrated in FIG. 2, three transaction sections such as transaction A, transaction B, and transaction C.

The domain-bound shared memory 134 may include a first domain-bound shared memory 220 that is an area for domain 0, and a second domain-bound shared memory 222 that is an area for domain 1. The first and second domain-bound shared memories 220 and 222, which are areas partitioned for individual domains, may each be further partitioned into a plurality of storage areas, for example, based on the type of corresponding shared device driver. For example, the first domain-bound shared memory 220 may include an area 230 which stores data generated when the first shared device driver 210 executes transactions, and an area 232 which stores data generated when the second shared device driver 212 executes transactions. For example, data generated when the first operating system 142 executes the transaction A of the first shared device driver 210 may be stored in buffers 00 and 01 of the area 230.

When the first operating system 142 executes the transaction A of the first shared device driver 210, the first operating system 142 may store status information 240 including, for example, an address of a start code of the transaction A, domain identification information, and a transaction start time, in the status log 138. In addition, the first operating system 142 may store data generated when operating the first shared device driver 210 in the first domain-bound shared memory 220.

After terminating execution of transaction A, the first operating system 142 may start to execute transaction B. At this time, the first operating system 142 may store status information including an address of a start code of transaction B, domain identification information, and a transaction start time, in the status log 138. In addition, the first operating system 142 may store data generated by operating the first shared device driver 210, in the first domain-bound shared memory 220.

If the second operating system 144 attempts to execute transaction B of the first shared device driver 210 when the first operating system 142 is executing transaction B, the virtual machine monitor 120 may determine that transaction B is already being executed by checking the status information stored in the status log 138, and may generate a conflict event.

The virtual machine monitor 120 may check priorities of the first and second operating systems 142 and 144 with respect to transaction I/O operations, based on priority information 136. In the priority information 136 illustrated in the example of FIG. 2, the values "2", "0", and "1" may be domain identification information, and more right sided priority queues may have higher priorities. In this example, priority value of "0" has a higher priority than a priority value of "1" and priority value "1" has a higher priority than priority value "2".

In the priority information 136, in this example the first operating system 142 corresponding to domain 0 and has higher priority than the second operating system 144. Accordingly, the virtual machine monitor 120 allows the first operating system 142 to continue to execute the transaction B. The second operating system 144 waits until the first operating system 142 terminates execution of the transaction B of the first shared device driver 210 and executes the transaction B after the first operating system 142 terminates execution of the transaction B.

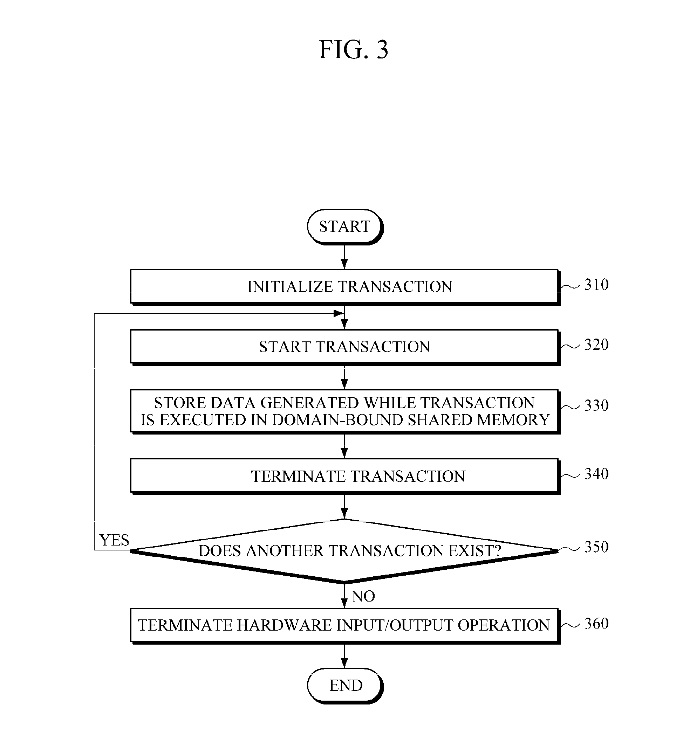

FIG. 3 illustrates an example of a method for providing a transactional input/output interface.

In the following example, the first shared device driver 132 of hardware that is used by a first operating system 142 is composed of a plurality of transaction sections and the first operating system 142 performs transaction I/O operations.

Referring to FIGS. 2 and 3, the first operating system 142 performs a transaction initialization in order to perform a transaction I/O operation in 310. For example, the virtual machine monitor 120 may assign a memory area to be used for a transaction to the domain-bound shared memory 134 for the first operating system 142, and the first operating system may store data generated before the transaction starts, in the memory area, for example, in a case where roll-back occurs due to pausation or cancellation of the transaction.

The first operating system 142 executes a transaction start instruction of the first transaction section in the shared device driver 132 in order to start a transaction in 320. When the transaction starts, the first operating system 142 may store the status information of the transaction in the status log 138.

The first operating system 142 stores data generated while the transaction is executed in the domain-bound shared memory 134 in 330. When the first operating system executes a transaction completion instruction of the first transaction section, the transaction of the first transaction section terminates in 340.

In 350, it is determined whether there is another transaction in the shared device driver 132 being used.

If there is another transaction in the first shared device driver 132 being used, the process returns to operation 320. If there is no other transaction in the shared device driver 132, the first operating system 142 terminates the hardware input/output operation in 360.

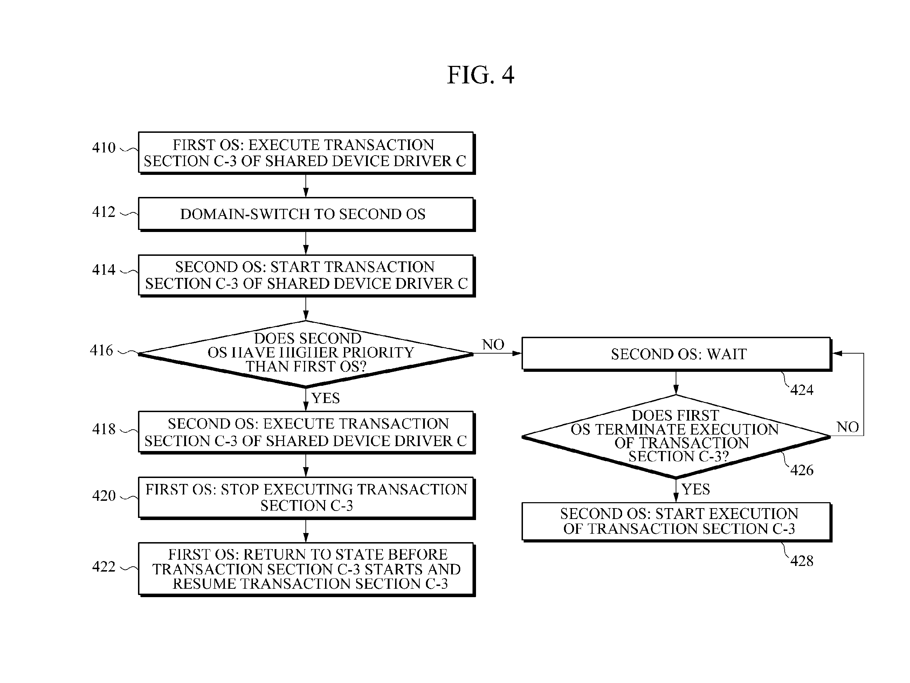

FIG. 4 illustrates an example of a method for processing conflicts between operating systems.

In this example, a driver C of the shared device driver 132 (see FIG. 2) is composed of three transaction sections C-1, C-2, and C-3. Also, in this example the first operating system 142 (see FIG. 2) starts the transaction section C-3 of the driver C, stores status information including identification information of the first operating system 142, an address of a start code of the transaction section C-3, and a start time of the transaction section C-3, in the status log 138, and then executes the transaction section C-3.

Referring to FIGS. 2 and 4, the first operating system 142 executes the transaction section C-3 of the driver C in the shared device driver 132 in 410. In response to a system request or a user's input, in 412 the virtual machine monitor 120 may domain-switch the first operating system 142 being executed in the foreground to the second operating system 144.

In this example, the second operating system 144 attempts to start the transaction section C-3 of the driver C in 414. The virtual machine monitor 120 senses the occurrence of conflicts based on the status log 138 and determines whether the second operating system 144 has a higher priority than the first operating system 142 based on the priority information 136 in 416. The virtual machine monitor 120 schedules transaction I/O operations between operating systems based on the result of the determination on priority of the second operating system 144.

If it is determined that the second operating system 144 has higher priority than the first operating system 142, in 418 the virtual machine monitor 120 allows the second operating system 144 to execute the transaction section C-3 of the shared device driver C.

The virtual machine monitor 120 may request the first operating system 142 to process an exception event. Accordingly, in 420 the first operating system 142 may stop executing the transaction section C-3 according to the processing of the exception event. When the second operating system 144 terminates the execution of the transaction section C-3, in 422 the first operating system 142 may return to the state before the transaction section C-3 started based on the status information stored in the status log 138, and resume the transaction section C-3. For example, the first operating system 142 may return to the state before the transaction section C-3 started, by restoring data and related information that have been generated upon execution of the previous transaction section of the transaction section C-3 and that are stored in the domain-bound shared memory 134. For example, the data and related information may be stored in units of atomic sections based on execution completion.

If it is determined that the second operating system 144 has a lower priority than the first operating system 142, in 424 the second operating system 144 enters a standby mode. When the first operating system 142 terminates the execution of the transaction section C-3 in 426, the second operating system 144 starts the execution of the transaction section C-3 in 428.

Accordingly, because a plurality of operating systems operating on a virtual machine monitor can simultaneously access hardware in parallel through transaction execution, it is possible to improve performance of input/output processing to/from hardware in a virtual environment where a plurality of operating systems are used.

As a non-exhaustive illustration only, the terminal device described herein may refer to mobile devices such as a cellular phone, a personal digital assistant (PDA), a digital camera, a portable game console, an MP3 player, a portable/personal multimedia player (PMP), a handheld e-book, a portable lab-top personal computer (PC), a global positioning system (GPS) navigation, and devices such as a desktop PC, a high definition television (HDTV), an optical disc player, a setup box, and the like, capable of wireless communication or network communication consistent with that disclosed herein.

A computing system or a computer may include a microprocessor that is electrically connected with a bus, a user interface, and a memory controller. It may further include a flash memory device. The flash memory device may store N-bit data via the memory controller. The N-bit data is processed or will be processed by the microprocessor and N may be 1 or an integer greater than 1. Where the computing system or computer is a mobile apparatus, a battery may be additionally provided to supply operation voltage of the computing system or computer.

It should be apparent to those of ordinary skill in the art that the computing system or computer may further include an application chipset, a camera image processor (CIS), a mobile Dynamic Random Access Memory (DRAM), and the like. The memory controller and the flash memory device may constitute a solid state drive/disk (SSD) that uses a non-volatile memory to store data.

The processes, functions, methods and/or software described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A virtualization apparatus comprising:
hardware;
a virtual machine monitor that supports a plurality of operating systems which use the hardware; and
a transaction device driver configured to execute a transaction for input/output operations to/from the hardware, and to provide an interface for executing a transaction for input/output operations to/from the hardware, when receiving requests for the input/output operations from a plurality of operating systems operating on the virtual machine monitor.

2. The virtualization apparatus of claim 1, wherein the transaction device driver comprises:
a shared device driver that is shared by the plurality of operating systems and that executes the transaction for the input/output operations to/from the hardware;
a plurality of domain-bound shared memories one for each of the plurality of operating systems, each domain-bound shared memory storing data generated when the transaction is executed by the domain-bound shared memory's respective operating system;
a status log including status information about transaction executions by the plurality of operating systems; and
priority information representing priorities of transaction executions between the plurality of operating systems.

3. The virtualization apparatus of claim 2, wherein the shared device drivers are provided based on the number of types of hardware modules included in the hardware.

4. The virtualization apparatus of claim 2 or 3, wherein the virtual machine monitor stores status information about the transaction in the status log when a transaction is executed, and deletes the status information about the transaction when the execution of the transaction terminates.

5. The virtualization apparatus of any of claims 1-4, wherein when two or more operating systems of the plurality of operating systems executing the input/output operations to/from the hardware using the transaction device driver execute code of the same transaction section thus generating a conflict, the virtual machine monitor requests an operating system having lower priority from among the two or more operating systems to terminate the execution of the transaction section.

6. The virtualization apparatus of any of claims 2-5, wherein the domain-bound shared memory is partitioned into a plurality of areas that are individually used by the plurality of operating systems, and
each of the plurality of areas is set to allow access only by its corresponding operating system.

7. The virtualization apparatus of any of claims 1-6, wherein the transaction device driver is positioned between the virtual machine monitor and the plurality of operating systems.

8. The virtualization apparatus of any of claims 1-7, wherein the transaction device driver is integrated with the virtual machine monitor.

9. A method of providing an interface for executing input/output operations to/from hardware in a virtualization environment where a virtual machine monitor supports a plurality of operating systems that use hardware, the method comprising:
at the plurality of operating systems, requesting input/output operations to/from the hardware in parallel to a transaction device driver; and
at the transaction device driver, executing a transaction for the input/output operations to/from the hardware, in response to the request from the plurality of operating systems, and providing an interface to allow the plurality of operating systems to execute the input/output operations to/from the hardware in parallel.

10. The method of claim 9, further comprising, when a first operating system from among the plurality of operating systems requests an input/output operation to/from first hardware,
at the transaction device driver, providing the first operating system with code of a transaction section for the input/output operation to/from the first hardware which is included in a shared device driver shared by the plurality of operating systems; and
at the first operating system, storing status information about execution of the transaction code in a status log and executing the transaction using the code of the transaction section.

11. The method of claim 10, wherein the status information includes identification information of the operating system, a start time of the transaction, and an address of a start code of the transaction.

12. The method of claim 10 or 11, further comprising, at the first operating system, storing data generated upon the execution of the transaction in an area assigned to and used by the first operating system only and included in a domain-bound shared memory.

13. The method of claim 10, 11 or 12, further comprising, if the second operating system attempts to execute a transaction for the first hardware using the same code of the transaction section as that provided to the first operating system when the transaction for the first hardware is still being executed by the first operating system,
at the virtual machine monitor, determining priority between the first operating system and the second operating system based on priority information that represents priorities of transaction executions between the plurality of operating systems; and
at an operating system determined to have lower priority between the first operating system and the second operating system, stopping the execution of the transaction.

14. A virtualization apparatus comprising:
a virtual machine monitor that supports a plurality of operating systems; and
a transactional device driver configured to provide an interface that allows the plurality of operating systems to perform input/output operations to/from hardware simultaneously, and configured to execute the input/output operations to/from the hardware such that the plurality of operating systems execute the input/output operations to/from hardware in parallel.

15. The virtualization apparatus of claim 14, wherein the transactional device driver comprises:
a shared device driver, shared by the plurality of operating systems, and which executes a transaction for the input/output operations to/from hardware for each of the plurality of operating systems; and
a domain-bound shared memory partitioned into a plurality of areas that are individually used by each of the plurality of operating systems such that each of the plurality of areas is set to allow access to only one of the plurality of operating systems, and each area stores data that is generated when a transaction is executed by the area's corresponding operating system.
